# FASCICULE DE BREVET EUROPEEN

(11) **EP 1 580 098 B1**
(45) Date de publication et mention de la délivrance du brevet: **09.01.2008**
(21) Numéro de dépôt: 05290551.0
(22) Date de dépôt: 11.03.2005
(51) Int. Cl.: B62D 25/06, B62D 27/02, B62D 65/00, B62D 25/02

(54) **Toit de véhicule automobile et véhicule automobile comportant un tel toit**
Dach für Kraftfahrzeug, und Kraftfahrzeug mit einem derartigen Dach
Vehicle roof, and vehicle with such a roof

(30) Priorité: 22.03.2004 FR 0402932
(43) Date de publication de la demande: 28.09.2005
(73) Titulaire: Peugeot Citroën Automobiles S.A., 78140 Vélizy Villacoublay (FR)
(72) Inventeur: Masson, Patrick, 92370 Chaville (FR)
(74) Mandataire: Lanceplaine, Jean-Claude

(56) Documents cités:
- DE-A- 10 228 974
- DE-A- 19 939 378
- US-A- 4 618 181
- US-A- 6 027 160

## Description

La présente invention concerne un toit de véhicule automobile, ainsi qu'un véhicule automobile équipé d'un tel toit.

Les caisses des véhicules automobiles sont formées à partir de divers éléments métalliques assemblés entre eux par soudage ou par rivetage et qui comprennent notamment un pavillon et, sur chaque flanc, un arc de pavillon fixé sur chacun des bords longitudinaux du pavillon, un longeron et un montant central reliant cet arc de pavillon à ce longeron.

Le plus souvent, ces différents éléments sont réalisés à partir de tôles en acier.

Or, la tendance des constructeurs de véhicules automobiles est de réduire le poids des véhicules pour diminuer la consommation, tout en conservant, voire en améliorant, la résistance aux chocs de ceux-ci.

Une des solutions envisagées consiste à utiliser des tôles de plus en plus minces ou des tôles à haute limite élastique, ce qui pose des problèmes connexes d'emboutissage et de résistance mécanique.

Une autre solution consiste à employer pour certains éléments de la caisse, des éléments réalisés à partir d'aluminium ou d'alliage d'aluminium dont le poids spécifique équivaut à un tiers de celui de l'acier. C'est le cas par exemple pour le pavillon des véhicules automobiles.

De préférence, le pavillon en aluminium est associé avec des arcs de pavillon réalisés en acier qui est un matériau permettant de mieux répondre aux contraintes de style que l'aluminium.

Mais, l'utilisation d'un tel matériau pour le pavillon avec des arcs de pavillon en acier pose des problèmes.

En effet, lors du passage de la caisse en cataphorèse et en étuve, il peut se produire une déformation géométrique du pavillon, compte tenu des dilations différentielles entre l'aluminium et l'acier.

Un exemple de la technique antérieure est divulgué par le document DE 19939977.

L'invention a pour but de proposer un toit de véhicule automobile qui évite les inconvénients précédemment mentionnés et qui permet d'obtenir un gain de poids au niveau de la caisse du véhicule automobile.

L'invention a donc pour objet un toit de véhicule automobile, du type comprenant un pavillon en aluminium ou en alliage d'aluminium muni sur chacun de ses bords longitudinaux d'un rebord de liaison avec un arc de pavillon comprenant un profilé supérieur en acier et un profilé inférieur en aluminium ou en alliage d'aluminium munis chacun d'une feuillure intérieure et d'une feuillure extérieure, caractérisé en ce que l'arc de pavillon comprend une âme en aluminium ou en alliage d'aluminium muni d'une feuillure intérieure et d'une feuillure extérieure destinées à être reliées chacune respectivement avec les feuillures des profilés supérieur et inférieur et en ce que la feuillure intérieure du profilé supérieur est disposée entre le rebord du pavillon et la feuillure intérieure de l'âme et comporte des moyens de liaison directe avec une portion du rebord du pavillon.

Selon d'autres caractéristiques de l'invention :
- les moyens de liaison sont formés par des créneaux répartis sur la longueur de la feuillure intérieure du profilé supérieur et par des bossages disposés sur la feuillure intérieure de l'âme au niveau de chaque créneau et directement en contact avec la portion du pavillon,
- chaque bossage de la feuillure intérieure de l'âme est relié au rebord du pavillon par soudage,
- une couche de colle est interposée entre le rebord du pavillon et la feuillure intérieure du profilé supérieur,
- le rebord du pavillon comporte un bord d'extrémité relevé et ménageant avec le profilé supérieur un espace dans lequel est placé un cordon d'étanchéité,
- les feuillures intérieures de l'âme et des profilés supérieur et inférieur sont reliées par des rivets,
- les feuillures extérieures de l'âme et les profilés supérieur et inférieur sont reliées par des rivets.

L'invention a également pour objet un véhicule automobile, caractérisé en ce qu'il comporte un toit tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une caisse d'un véhicule automobile équipée d'un toit conforme à l'invention,
- la Fig. 2 est une vue schématique en perspective et en coupe transversale du toit conforme à l'invention,
- la Fig. 3 est une vue schématique en perspective et éclatée des bords d'assemblage du pavillon et de l'arc de pavillon du toit conforme à l'invention,
- la Fig. 4 est une vue schématique en perspective des bords d'assemblage du pavillon et de l'arc de pavillon après assemblage,
- la Fig. 5 est une vue schématique en perspective des bords d'assemblage du pavillon et de l'arc de pavillon entre deux bossages, et
- la Fig. 6 est une vue schématique en perspective des bords d'assemblage du pavillon et de l'arc de pavillon au niveau d'un bossage.

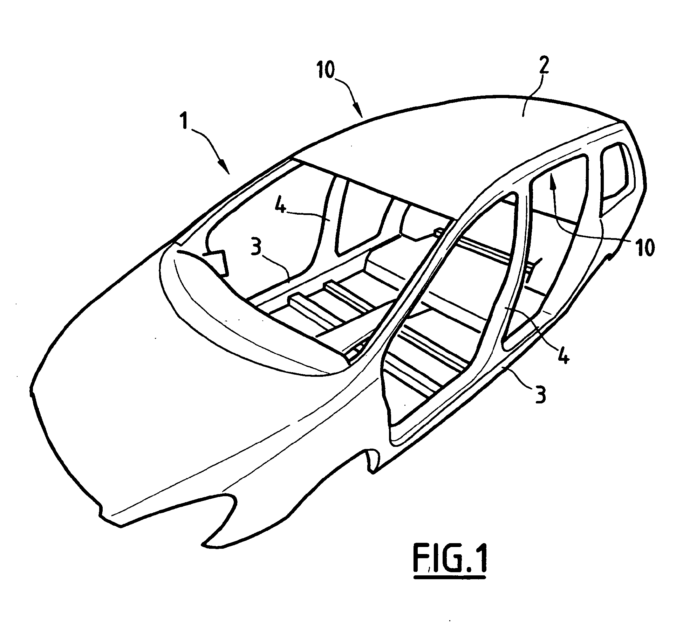

Sur la Fig. 1, on a représenté schématiquement une caisse d'un véhicule automobile, désignée dans son ensemble par la référence 1, et qui comprend notamment un pavillon 2, deux arcs de pavillon désignés par la référence générale 10, deux longerons 3 et deux montants centraux 4 reliant chacun un arc de pavillon 10 et un longeron 3.

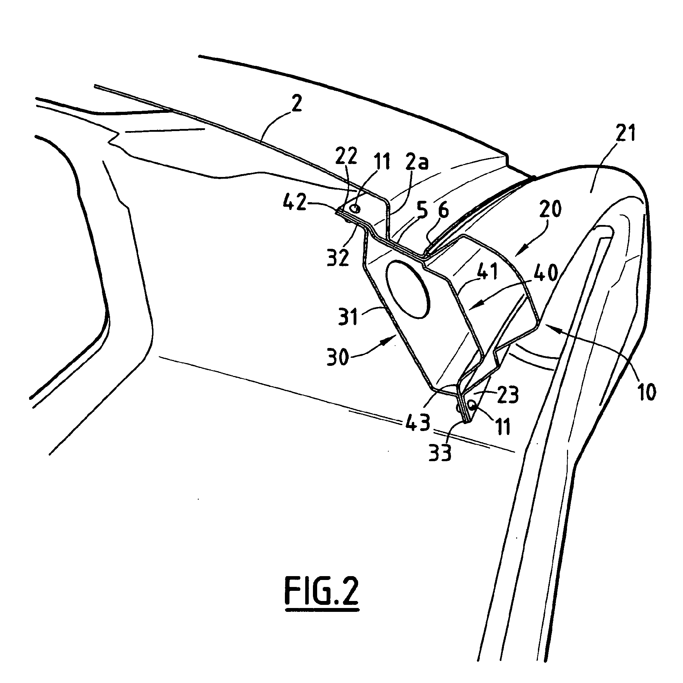

Ainsi que montré sur les Figs. 2 à 6, le pavillon 2 qui est en aluminium ou en alliage d'aluminium, comporte, sur chacun de ses bords longitudinaux 2a, un rebord 5 de liaison avec l'arc de pavillon 10 adjacent.

Chaque rebord 5 est formé par une extrémité pliée du bord longitudinal 2a du pavillon 2 et comporte un bord d'extrémité 6 relevé.

En se reportant maintenant à la Fig. 2, on va décrire un arc de pavillon 10 destiné à être relié à un rebord 5 du pavillon 2, l'arc du pavillon 10 destiné à être relié à l'autre rebord 5 de ce pavillon 2 étant identique.

Dans ce qui suit, le terme "intérieur" indique que l'élément associé est situé du côté de l'habitacle du véhicule et le terme "extérieur" indique que l'élément qui lui est associé est disposé vers l'extérieur de l'habitacle.

Par ailleurs, sur les figures, les épaisseurs des éléments composant l'arc de pavillon 10 ont été volontairement augmentées afin de faciliter la compréhension.

Comme montré à la Fig. 2, l'arc de pavillon 10 comprend un profilé supérieur 20 en acier comportant une partie centrale 21 longitudinale bordée sur l'un de ses bords d'une feuillure intérieure 22 et sur l'autre desdits bords d'une feuillure extérieure 23.

Cet arc de pavillon 20 comprend également un profilé inférieur 30 comportant une partie centrale 31 longitudinale bordée sur l'un de ses bords d'une feuillure intérieure 32 et sur l'autre desdits bords d'une feuillure extérieure 33.

Enfin, l'arc de pavillon 10 comprend aussi une âme 40 comportant une partie centrale 41 longitudinale bordée sur l'un des bords d'une feuillure intérieure 42 et sur l'autre desdits bords d'une feuillure extérieure 43.

Le profilé inférieur 30 et l'âme 40 sont en aluminium ou en alliage d'aluminium et la feuillure intérieure 42 de l'âme 40 est disposée entre les feuillures intérieures 22 et 32 des profilés 20 et 30, tandis que la feuillure extérieure 43 de cette âme 40 est disposée entre les feuillures extérieures 23 et 33 des profilés 20 et 30.

Les feuillures intérieures 22, 32 et 42 et les feuillures extérieures 23, 33 et 43 respectivement des profilés supérieur 20 et inférieur 30 et de l'âme 40 sont fixées entre elles par rivetage à l'aide de rivets 11 disposés à intervalles réguliers sur toute la longueur de ces feuillures.

D'une manière générale, la feuillure intérieure 22 du profilé supérieur 20 comporte des moyens de liaison directe avec une portion du rebord 5 du pavillon 2.

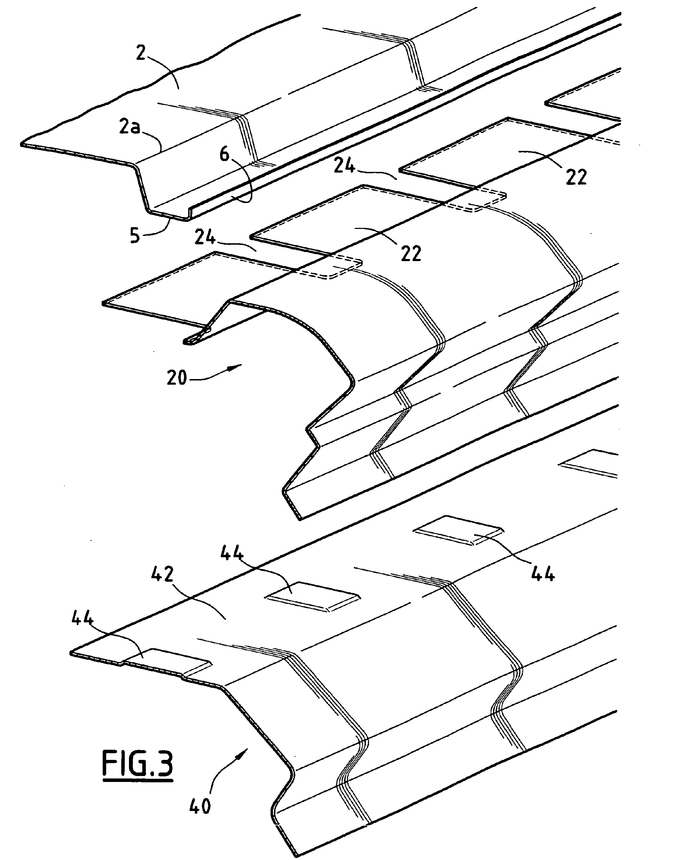

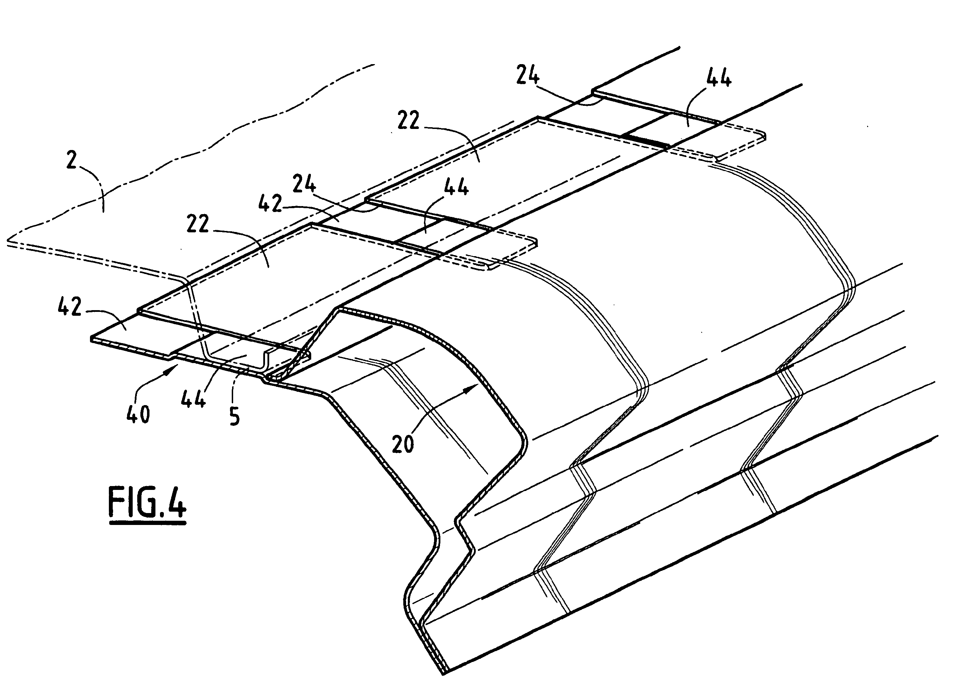

Ainsi que montré plus particulièrement sur les Figs. 3 et 4, ces moyens de liaison sont formés par des créneaux 24 répartis sur la longueur de la feuillure intérieure 22 du profilé supérieur 20 de manière uniforme et selon un pas déterminé. La feuillure intérieure 42 de l'âme 40 comporte des bossages 44 répartis sur la longueur de ladite feuillure 42 de manière uniforme et selon un pas déterminé identique au pas des créneaux 24.

De préférence, le pas entre les créneaux 24 et les bossages 44 est compris entre 180 mm et 200 mm. L'épaisseur des bossages 44 correspond sensiblement à l'épaisseur de la feuillure 22 du profilé supérieur 20.

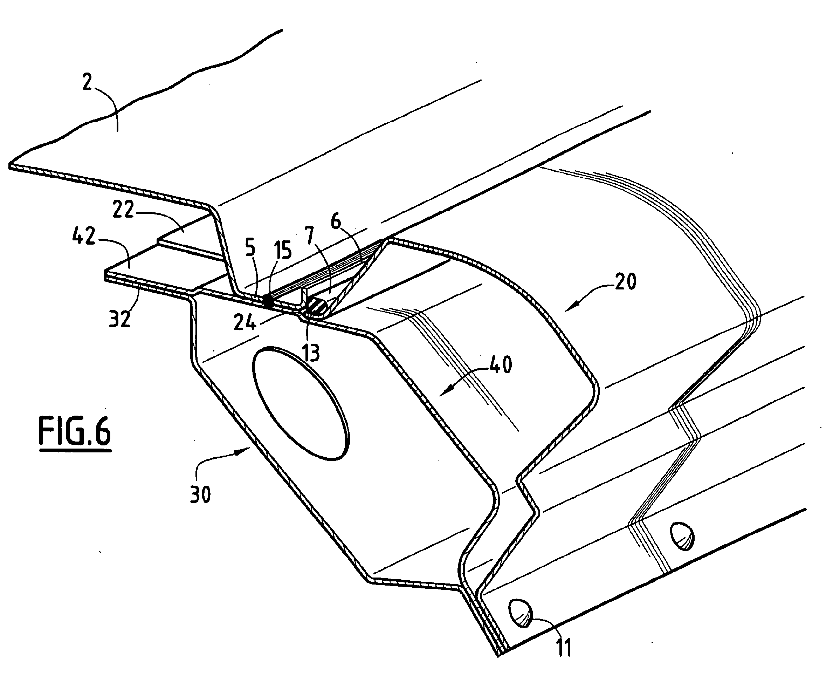

Lors de l'assemblage des profilés supérieur 20 et inférieur 30 avec l'âme 40, chaque bossage 44 de la feuillure intérieure 42 est placé dans un créneau 24 de la feuillure intérieure 22 du profilé supérieur 20, ainsi que montré plus particulièrement sur les Figs. 4 et 6.

De ce fait, lorsque le rebord de liaison 5 du pavillon 2 est assemblé avec l'arc de pavillon 10, chaque bossage 44 de l'âme 40 vient directement en contact avec une portion de ce rebord de liaison 5 du pavillon 2 ce qui permet d'avoir, à intervalles réguliers, des parties de l'âme 40 en aluminium ou en alliage d'aluminium en contact direct avec des parties du rebord de liaison 5 du pavillon 2 également en aluminium ou en alliage d'aluminium.

Par conséquent, dans ces zones, le pavillon 2 en aluminium ou en alliage d'aluminium peut être relié avec l'âme 40 de l'arc de pavillon 10 qui est dans le même matériau que ce pavillon 2, c'est à dire en aluminium ou en alliage d'aluminium, facilitant ainsi l'assemblage de ces deux éléments.

Chaque bossage 44 permet donc de rattraper le saut d'épaisseur de la feuillure intérieure 22 du profilé supérieur 20 qui est lui en acier et chaque bossage 44 est fixé au rebord de liaison 5 du pavillon 2 par une soudure 15 (Fig. 6), comme par exemple une soudure au laser ou une soudure électrique par points.

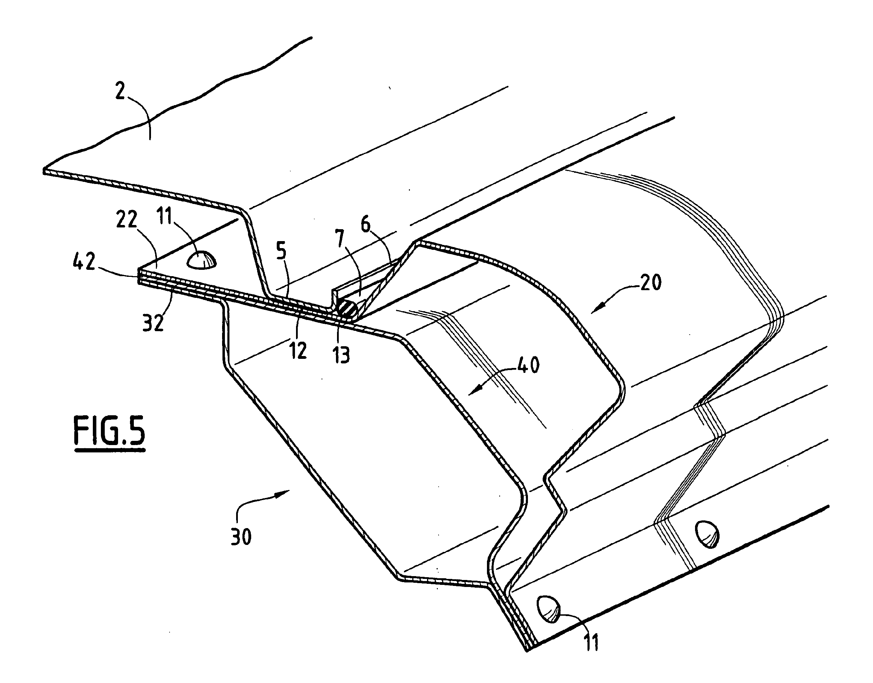

Dans les zones où le rebord de liaison 5 du pavillon 2 est en contact avec la feuillure intérieure 22 du profilé supérieur 20, c'est à dire dans les zones de contact acier/aluminium, une couche de colle 12 (Fig. 5) est interposée entre ledit rebord de liaison 5 et ladite feuillure 22.

Pour parfaire l'étanchéité entre le pavillon 2 et l'arc de pavillon 10, un cordon d'étanchéité 13 est placé dans l'espace 7 ménagé entre le bord relevé 6 du pavillon 2 et le profilé supérieur 20 de l'arc de pavillon 10, ainsi que montré à la Fig. 5.

Le toit selon l'invention permet d'avoir dans les zones de liaison entre le pavillon en aluminium et l'arc de pavillon en acier un contact direct entre des matériaux de même nature grâce à l'interposition d'une âme en aluminium ce qui facilite les techniques d'assemblage et supprime les risques de déformation dans ces zones et également au niveau du pavillon, notamment au moment du passage de la caisse en cataphorèse et en étuve.

Enfin, le toit selon l'invention permet d'obtenir un gain de poids de la caisse du véhicule automobile et ainsi de pouvoir optimiser la position du centre de gravité.

## Revendications

1. Toit de véhicule automobile, du type comprenant un pavillon (2) en aluminium ou en alliage d'aluminium muni sur chacun de ses bords longitudinaux (2a) d'un rebord (5) de liaison avec un arc de pavillon (10) comprenant un profilé supérieur (20) en acier et un profilé inférieur (30) en aluminium ou en alliage d'aluminium munis chacun d'une feuillure intérieure (22 ; 32) et d'une feuillure extérieure (23 ; 33), **caractérisé en ce que** l'arc de pavillon (10) comprend une âme (40) en aluminium ou en alliage d'aluminium munie d'une feuillure intérieure (42) et d'une feuillure extérieure (43) destinées à être reliées chacune respectivement avec les feuillures (22 ; 32 - 23 ; 33) des profilés supérieur (20) et inférieur (30) et **en ce que** la feuillure intérieure (22) du profilé supérieur (20) est disposée entre le rebord (5) du pavillon (2) et la feuillure intérieure (42) de l'âme (40) et comporte des moyens de liaison directe (24 ; 44) avec une portion du rebord (5) du pavillon (2).

2. Toit de véhicule automobile selon la revendication 1, **caractérisé en ce que** les moyens de liaison sont formés par des créneaux (24) répartis sur la longueur de la feuillure intérieure. (22) du profilé supérieur (20) et par des bossages (44) disposés sur la feuillure intérieure (42) de l'âme (40) au niveau de chaque créneau (24) et directement en contact avec la portion (5) du pavillon.

3. Toit de véhicule automobile selon la revendication 2, **caractérisé en ce que** chaque bossage (44) de la feuillure intérieure de l'âme (40) est reliée au rebord (5) du pavillon (2) par soudage.

4. Toit de véhicule automobile selon l'une quelconque des revendications 1 à 3, **caractérisé en ce qu'**une couche (12) de colle est interposée entre le rebord (5) du pavillon (2) et la feuillure intérieure (22) du profilé supérieur (20).

5. Toit de véhicule automobile selon l'une quelconque des revendications 1 à 4, **caractérisé en ce que** le rebord (5) du pavillon comporte un bord d'extrémité (6) relevé ménageant avec le profilé supérieur (20), un espace (7) dans lequel est placé un cordon d'étanchéité (13).

6. Toit de véhicule automobile selon l'une quelconque des revendications 1 à 5, **caractérisé en ce que** les feuillures intérieures (22 ; 32 ; 42) des profilés supérieur (20) et inférieur (30) et de l'âme (40) sont reliées par des rivets (11).

7. Toit de véhicule automobile selon l'une quelconque des revendications 1 à 6, **caractérisé en ce que** les feuillures extérieures (23 ; 33 ; 43) des profilés supérieur (20) et inférieur (30) et de l'âme (40) sont reliées par des rivets (11).

8. Véhicule automobile, **caractérisé en ce qu**'il comporte un toit selon l'une quelconque des revendications précédentes.

## Claims

1. Motor-vehicle roof of the type comprising an aluminium or aluminium-alloy roof canopy (2) which is provided, on each of its longitudinal edges (2a), with a border (5) for linkage with a roof-canopy arch (10) comprising an upper steel section (20) and a lower aluminium or aluminium-alloy section (30), each of which sections is provided with an internal rebate (22; 32) and an external rebate (23; 33), **characterised in that** the roof-canopy arch (10) comprises an aluminium or aluminium-alloy core (40) provided with an internal rebate (42) and an external rebate (43), which rebates are intended to be each connected to the rebates (22; 32 - 23; 33) of the upper (20) and lower (30) sections respectively, and **in that** the internal rebate (22) of the upper section (20) is disposed between the border (5) of the roof canopy (2) and the internal rebate (42) of the core (40) and has means (24; 44) for direct linkage with a portion of the border (5) of the roof canopy (2).

2. Motor-vehicle roof according to claim 1, **characterised in that** the linking means are formed by slots (24) distributed over the length of the internal rebate (22) of the upper section (20) and by bosses (44) which are disposed on the internal rebate (42) of the core (40) at the level of each slot (24) and are in direct contact with the portion (5) of the roof-canopy.

3. Motor-vehicle roof according to claim 2, **characterised in that** each boss (44) on the internal rebate of the core (40) is connected to the border (5) of the roof canopy (2) by welding.

4. Motor-vehicle roof according to any of claims 1 to 3, **characterised in that** a layer (12) of adhesive is interposed between the border (5) of the roof canopy (2) and the internal rebate (22) of the upper section (20).

5. Motor-vehicle roof according to any of claims 1 to 4, **characterised in that** the border (5) of the roof canopy has a turned-up end edge (6) which forms, with the upper section (20), a space (7) within which a sealing cord (13) is located.

6. Motor-vehicle roof according to any of claims 1 to 5, **characterised in that** the internal rebates (22; 32; 42) of the upper (20) and lower (30) sections and of the core (40) are connected by rivets (11).

7. Motor-vehicle roof according to any of claims 1 to 6, **characterised in that** the external rebates (23; 33; 43) of the upper (20) and lower (30) sections and of the core (40) are connected by rivets (11).

8. Motor vehicle, **characterised in that** it has a roof according to any of the preceding claims.

## Patentansprüche

1. Kraftfahrzeugdach des Typs, der ein Autodach (2) aus Aluminium oder aus einer Aluminiumlegierung umfasst, das an jedem seiner longitudinalen Ränder (2a) mit einer Kante (5) für die Verbindung mit einem Dachbogen (10) versehen ist, der ein oberes Profil (20) aus Stahl und ein unteres Profil (30) aus Aluminium oder einer Aluminiumlegierung aufweist, die jeweils mit einem inneren Falz (22; 32) und einem äußeren Falz (23; 33) versehen sind, **dadurch gekennzeichnet, dass** der Dachbogen (10) einen Kern (40) aus Aluminium oder einer Aluminiumlegierung aufweist, der mit einem inneren Falz (42) und einem äußeren Falz (43) versehen ist, die dazu bestimmt sind, jeweils mit einem der Falze (22; 32-23; 33) des oberen Falzes (20) bzw. des unteren Falzes (30) verbunden zu werden, und dass der innere Falz (22) des oberen Profils (20) zwischen der Kante (5) des Autodachs (2) und dem inneren Falz (42) des Kerns (40) angeordnet ist und Mittel (24; 44) zum direkten Verbinden mit einem Abschnitt der Kante (5) des Autodachs (2) aufweist.

2. Kraftfahrzeugdach nach Anspruch 1, **dadurch gekennzeichnet, dass** die Verbindungsmittel durch Einschnitte (24), die auf der Länge des inneren Falzes (22) des oberen Profils (20) verteilt sind, und durch Erhebungen (44), die auf dem inneren Falz (42) des Kerns (40) auf Höhe jedes Ausschnitts (24) angeordnet und mit dem Abschnitt des Autodachs (5) direkt in Kontakt sind, gebildet sind.

3. Kraftfahrzeugdach nach Anspruch 2, **dadurch gekennzeichnet, dass** jede Erhebung (44) des inneren Falzes des Kerns (40) mit der Kante (5) des Autodachs (2) durch Schweißen verbunden ist.

4. Kraftfahrzeugdach nach einem der Ansprüche 1 bis 3, **dadurch gekennzeichnet, dass** zwischen die Kante (5) des Autodachs (2) und dem inneren Falz (22) des oberen Profils (20) eine Klebeschicht eingefügt ist.

5. Kraftfahrzeugdach nach einem der Ansprüche 1 bis 4, **dadurch gekennzeichnet, dass** die Kante (5) des Autodachs einen erhöhten Abschlussrand (6) aufweist, der zusammen mit dem oberen Profil (20) einen Zwischenraum (7) schafft, in dem eine Dichtungsschnur (13) angeordnet ist.

6. Kraftfahrzeugdach nach einem der Ansprüche 1 bis 5, **dadurch gekennzeichnet, dass** die inneren Falze (22; 32; 42) des oberen Profils (20) und des unteren Profils (30) des Kerns (40) durch Nieten (11) miteinander verbunden sind.

7. Kraftfahrzeugdach nach einem der Ansprüche 1 bis 6, **dadurch gekennzeichnet, dass** die äußeren Falze (23; 33; 43) des oberen Profils (20) und des unteren Profils (30) des Kerns (40) durch Nieten (11) miteinander verbunden sind.

8. Kraftfahrzeug, **dadurch gekennzeichnet, dass** es ein Dach nach einem der vorhergehenden Ansprüche aufweist.
